# EUROPEAN PATENT SPECIFICATION

(11) **EP 3 943 434 B1**
(45) Date of publication and mention of the grant of the patent: **13.11.2024**
(21) Application number: 20187644.8
(22) Date of filing: 24.07.2020
(51) Int. Cl.: B66C 1/10, B66C 13/08, F03D 13/10

(54) **LIFTING APPARATUS FOR A LIFTING CRANE, CRANE AND METHOD FOR LIFTING**
HUBVORRICHTUNG FÜR EINEN HUBKRAN, KRAN UND VERFAHREN ZUM HEBEN
APPAREIL DE LEVAGE POUR UNE GRUE DE LEVAGE, GRUE ET PROCÉDÉ DE LEVAGE

(43) Date of publication of application: 26.01.2022
(73) Proprietor: Siemens Gamesa Renewable Energy A/S, 7330 Brande (DK)
(72) Inventor: Jepsen, Andreas Winther, 7100 Vejle (DK); Moeller, Jesper, 7330 Brande (DK)
(74) Representative: SGRE-Association

(56) References cited:
- DE-A1- 102012 010 019
- GB-A- 2 573 796
- JP-A- H05 132 283
- US-A1- 2019 271 298

## Description

The invention refers to a lifting apparatus for a lifting crane, adapted to carry an elongated component, especially a rotor blade of a wind turbine, comprising a frame with at least two support arms for carrying the component.

Large and elongated components are usually moved by a lifting crane, which is adapted to lift and position the respective component for attaching it for example to a construction. An example for such a component is a rotor blade of a wind turbine, which, when the wind turbine is installed, needs to be positioned and fixed to the hub of the wind turbine, to which usually three rotor blades are attached. For lifting such a component respectively a rotor blade, a specific lifting apparatus is used, which is connected to the lifting crane, and which is adapted to safely carry the component. The lifting apparatus comprises a frame with at least two support arms for carrying the component, which support arms have for example an L- or C-shape. This lifting apparatus is adapted to carry the component respectively the rotor blade with a horizontal orientation, which is advantageous for lowering the loads applied to the crane boom, which became higher due to the increasing size of the blades. For controlling the horizontal movement of the component respectively the blade at tagline system is usually used, which comprises several cables attached to the lifting apparatus. This allows for a certain control of the horizontal movement. Nevertheless, especially when the component respectively the blade is lifted at higher wind speeds, a certain vertical movement occurs, which is especially problematic in view of a vertical movement of the blade root, which blade root needs to be precisely positioned relative to the attachment interface of the hub. This vertical movement respectively vertical tilt moment results from the airfoil cross-section of the rotor blade. When the wind blows with higher speed around the rotor blade, different wind speeds are given at the upper and the lower side of the blade, resulting in a pressure difference between the upper and the lower side. These pressure difference leads to a certain suction or drag effect moving the blade to the lower pressure side. This effect in turn results in the tilting movement, as the blade as a whole follows this effect. This effect is commonly known from airplane wings, but has a negative influence on the installation process of for example a turbine blade.

The vertical movement may negatively influence the positioning and fixing process. As it is caused by the wind interacting with the component, especially the airfoil shaped blade, it restricts the installation to times where the wind speed is quite low and therefor narrows the weather window, in which the installation can be done. This is especially a problem at off-shore installations of wind turbines, as the wind over the sea is often strong. Further the vertical movement causes long installation times due to the problems in positioning the root.

DE 10 2012 010019 A1 dicloses an equipment which has multiple control elements controlling a pre-defined layer of the equipment by differences in rotational speed and/or by change of position based on environmental conditions. A wing-shaped air deflector panel regulates the layer by change of position such as pitch, based on the environmental conditions.

It is therefore an object of the invention to provide an improved lifting apparatus.

For addressing the object the invention proposes a lifting apparatus comprising the features of claim 1 for a lifting crane, adapted to carry an elongated component, especially a rotor blade of a wind turbine, comprising a frame with at least two support arms for carrying the component, which lifting apparatus is characterized in that at least one flap-like interaction means for interacting with blowing wind is provided at the frame or a support arm, which flap-like interaction means is movable from a non-working position to a working position, in which it is set against the wind.

The inventive lifting apparatus, usually also called a yoke, is equipped with one or more flap-like interaction means, which may also be named as a spoiler means. These flap-like or spoiler-like interaction means is movable between a non-working position, in which it does not interact with the blowing wind, and a working position, in which it is deployed or orientated against the wind, so that it interacts with the blowing wind. The arrangement is such that when the interaction means, which may also be named as an arrow flap, is moved to the working position, the aerodynamic setup of the lifting apparatus is locally influenced by the interaction means. When the wind interacts with the one or the several flap- or spoiler-like elements a reaction force is exercised on the lifting apparatus which generates a certain tilting moment to the lifting apparatus, which, as mentioned, is attached to the lifting crane at a certain attachment point. This counteracting tilt moment can at least in part, preferably totally, balance the tilt moment caused by the wind acting on the component respectively the rotor blade, which induces the unwanted vertical movement. By creating this counteracting tilt moment by moving the flap-like interaction means in the working position and thereby changing the shape respectively the aerodynamic properties of the lifting apparatus, an unwanted tilt moment induced by higher wind speeds can be at least in part, preferably completely, be compensated. This allows for an improved and especially faster installation process e.g. of a wind turbine blade, which may now also be performed at higher wind speeds of for example up to 16 m/s or higher, whereby a rotor blade installation at these high wind speeds is either not possible with known lifting apparatus or takes a lot more time due to the uncontrollable vertical tilting.

Preferably, several flap-interaction means are arranged at different positions at the frame and/or at least one support arm. Using several flap-like interaction means allows for a better control of the generated counter tilt moment or movement, as these several flap-like interaction means allow for various changes of the overall aerodynamic shape of the lifting apparatus.

As the wind may blow from different sides, it is advantageous to have flap-like interaction means which can be set against the wind in different direction, preferably opposite to one another. This allows to interact with the wind blowing from different, especially opposite directions.

Preferably, the at least one or the several flap-like interaction means are arranged close to or at the end of the frame or at the top or the bottom or the side of the support arm. Preferably, the one or the several flap-like interaction means are arranged distanced to the point where the lifting apparatus is attached to the lifting device of the crane, so that a larger lever is realized, which allows for creating a relatively high counter tilt moment or movement. The several interaction means may be arranged at different positions at the frame or the support arms, preferably at the end of the frame, seen in the longitudinal direction of the frame, or at the top, bottom or the side of the support arm, wherever appropriate.

In a preferred embodiment, the several flap-like interaction means are arranged close to or at both ends of the frame or at the top or the bottom or the side of both support arms. According to this embodiment, several flap-like interaction means are arranged on both sides relative to the attachment point of the lifting apparatus to the lifting device of the crane. This allows for precisely controlling respectively counteracting a vertical movement of the blade root in an upward or in a downward direction, which movement depends on the orientation of the blade gripped by the lifting apparatus and its interaction with the blowing wind. Especially when several flap-like interaction means are distributed at both sides, and if each group of interaction means comprises several flaps which may be positioned with different angles towards the wind, a very precise control and generation of the counteracting tilt moment is possible. And when each respective end side group of the interaction means comprises interaction means which can be set against different wind directions, the compensation is possible over a wide variety of wind situations.

In a first embodiment, the or at least one of the flap-like interaction means is mounted pivotally at the frame or the support arm. This allows to simply swivel or pivot the flap-like means from the non-working position to the working position or to any position in between the non-working position and a maximum working position, in which it may certainly also be positioned. Preferably all flap-like interaction means are pivotally mounted to the frame or arm and may therefore be simply swiveled in a necessary position.

In an alternative to this pivot arrangement it is possible, that the or at least one of the several flap-like interaction means is movable by shifting at the frame or support arm. In this embodiment each flap-like means is simply pushed from the non-working position to the working position in a linear movement. Also, this allows for a simple position change. In a further embodiment, this shifting movement may not only be a linear movement, but a combined linear and curved movement, so that the respective flap is pushed and raised along a curved line of movement.

According to the invention, the at least one or each flap-like interaction means is shiftable along the frame or the support arm to change its frame or arm position. This allows for not only changing the position of the respective flap from a non-working to a working position, but also to change the overall position of the respective flap at the frame or the support arm. It may either be shifted in the direction of the longitudinal axis of the frame, or also perpendicular to it. This provides a further degree of freedom regarding the positioning of the respective flap and for changing the overall aerodynamic shape of the lifting apparatus and therefore allows for an even further improved control of the generation of the counter tilt moment. For realizing this linear shifting movement, the respective flaps are arranged to the frame or the support arm by respective linear guides or rails, along which they may be moved.

For moving the at least one flap-like interaction means respectively each separate interaction means at least from the non-working position to the working position and/or at least for changing the position at the frame or support arm, at least one controllable actuator is provided for each flap. The actuator moves the flap or spoiler from the non-working position to the working position for changing the flap or spoiler position at the frame or the arm. When both a movement from the non-working position to the working position and a position change at the frame or arm is possible, two respective actuators for each kind of movement are provided for each flap.

Such an actuator is either a hydraulic or pneumatic or electric cylinder, or an electric motor, any of which actuators is controlled by a respective control device.

Preferably at least one control device is provided for controlling the movement of the at least one or, most preferably, of each flap-like interaction means, especially by controlling the or each actuator. This control device, which comprises a respective programable control, allows for very precisely controlling the movement of the or each separate flap in order to generate the counter tilt moment.

For a very exact control preferably at least one sensor means for sensing a given or upcoming vertical tilting or movement of the lifting apparatus or of the frame or of at least on arm is provided, whereby the control device is adapted to control the movement of the at least one or of the several flap-like interaction means depending on the sensor means information. The sensor means is, in general, adapted to sense the vertical movement of the lifting apparatus. It is arranged at the frame or a support arm, while certainly several various sensors may be arranged at different positions. The or each sensor means communicates with at least one control device, preferably the overall control device controlling the movement of all aero flaps. The control device is adapted to process the respective sensor means information and to recognize any inadmissible vertical movement of the blade respectively of the blade root. Based on the measured vertical movement, which is either already given or which may be expected due to the sensor information, the control device may activate and control the respective flaps respectively the actuators for generating the counter tilt moment respectively counter movement. The sensor means may measure the orientation or movement directly, or, maybe with one or more separate sensors, for example the wind speed or the wind direction as indirect parameters for determining a given or upcoming tilting movement.

The invention further refers to a crane comprising a lifting means with a lifting apparatus as described above. The crane may comprise a lifting means comprising one or more lifting cables, to which a connection device is attached, at which connection device the lifting apparatus is attached. The lifting apparatus may tilt relative to this connection device in the vertical direction, respectively may tilt around the horizontal axis. The counter tilt moment or the counter tilt movement counters or compensates such an unwanted vertical tilt moment or unwanted vertical tilt movement and stabilizes the component respectively the rotor blade in its horizontal position.

Furthermore, for also countering any horizontal movement of the component respectively the blade, i.e. any tilting or rotation around the vertical axis, one or more taglines may be attached to the lifting apparatus.

Finally, the invention refers to a method for lifting a component, especially a rotor blade of a wind turbine, using a crane as described above. This method is characterized in that during the lifting process, when a tilting movement of the lifting apparatus or at least the possibility of such a tilting movement is detected, the at least one flap-like interaction means or one or more of the several flap-like interaction means are moved from the non-working position to the working position for counteracting the tilting movement. Even when the possibility of such an unwanted vertical tilting movement is sensed by one or various sensors, this sensor information may be processed and used as a hint that an unwanted vertical movement may happen, allowing for the control device to immediately react beforehand.

During the lifting process, the orientation of the lifting apparatus may constantly be sensed by at least one sensor means of the lifting apparatus, whereby the one or more flap-like interaction means are controlled by a control device based on the provided sensor means information. The one or the several sensor means allow for constantly monitoring the position respectively the movement or any other relevant information like wind speed or wind direction, while the control device constantly processes any sensor means information to immediately control any of the flaps if necessary.

Finally, the control device may not only control the movement of the flap-like interaction means from the non-working position to the working position, but also the movement for changing the position of the respective flap-like interaction means at the frame or the support arm. This even widens the variety of changing the overall aerodynamic shape of the lifting apparatus.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: shows a principle sketch of a part of an inventive crane comprising an inventive lifting apparatus holding a rotor blade to be attached to a wind turbine,
- Fig. 2: shows a side view of the lifting apparatus of fig. 1, seen from the side of the root of the turbine blade, and
- Fig. 3: shows another side view, in a 90°-direction compared to fig. 2, of the lifting apparatus.

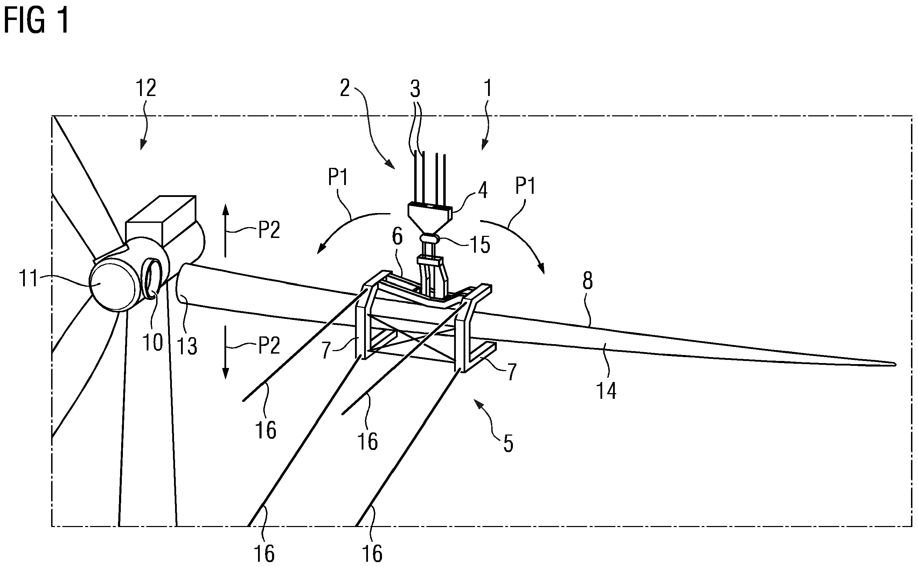

Fig. 1 shows a part of an inventive lifting crane 1 comprising a lifting device 2 with several cables 3, to which a connection device 4 is attached, as commonly known.

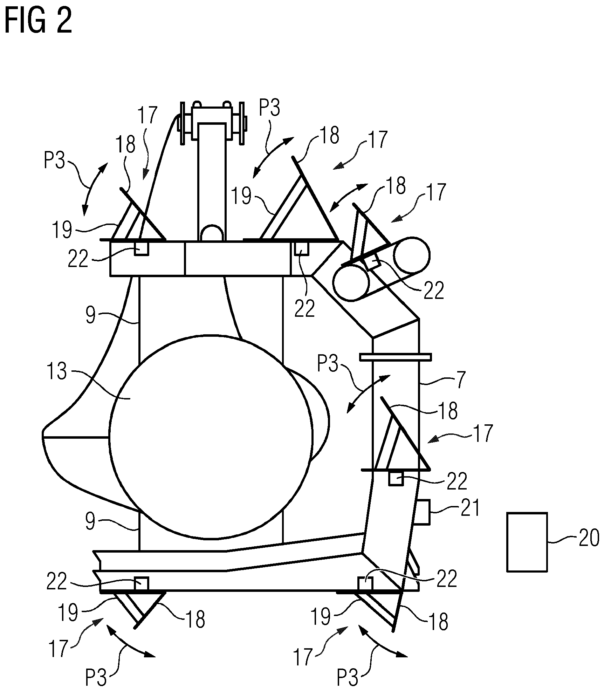

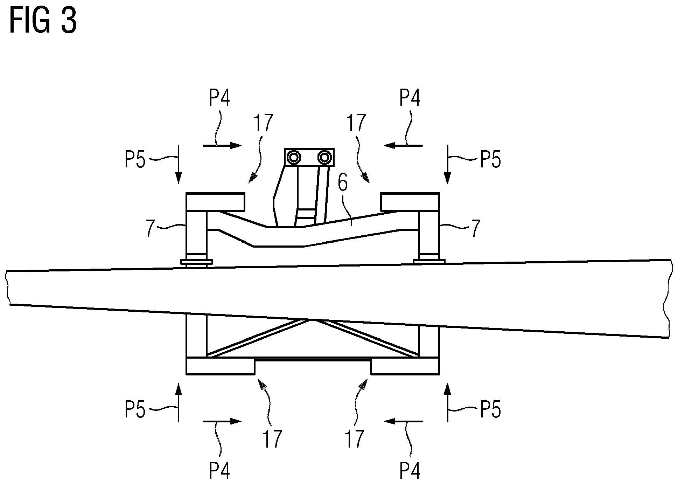

To the connection device 4 an inventive lifting apparatus 5, often also called yoke, is attached. The lifting apparatus 5 comprises, see also figs. 2 and 3, a frame 6 with two end-standing support arms 7, which here have a C-form.

A component, here a rotor blade 8, is carried by the lifting apparatus 6. The C-shaped support arms 7 are equipped with respective holding means 9 for holding or gripping the rotor blade 8.

The rotor blade 8 is arranged in a horizontal direction and is lifted to be attached to a mounting interface 10 of a hub 11 of a wind turbine 12 shown in fig. 1. It is therefore necessary to precisely position the blade root 13, which extends in the airfoil-shaped blade body 14, exactly relative to the mounting interface 10. This lifting and positioning is sometimes performed while wind blows and therefore interacts with the rotor blade 8 making the rotor blade 8 move.

The connection of the lifting apparatus 5 to the connection device 4 is not stiff. It is realized for example by a cable connection 15, which allows for the lifting apparatus 5 and therefore for the rotor blade 8 to rotate around a vertical axis. For stabilizing the lifting apparatus 5 respectively the blade 8 taglines 16 are attached to the lifting apparatus 5, by which a horizontal movement may be avoided or at least widely compensated.

The cable connection 15 does not only allow for a rotation around a vertical axis, but also for a tilting movement around a horizontal axis, which tilting movement is shown by the arrows P1. This tilting movement makes the lifting apparatus 5 tilt to the left or right side shown in fig. 1, which tilting movement results in a respective movement of the rotor blade 8. Therefore, depending on the tilting to the left or to the right, the blade root 13 either performs a vertical movement upwards or downwards, as shown by the arrows P2 in fig. 1. Therefore, its relative position to the mounting interface 10 may change due to such a vertical movement, which therefore needs to be counteracted.

For counteracting such a vertical movement, the lifting apparatus 5 comprises several flap-like interaction means 17. Each flap-like interaction means 17 comprises a flap element 18, which is movable between a non-working position, in which it does not change the aerodynamic shape of the lifting apparatus 5, and in which it is arranged horizontally, so that it is not set or deployed against the wind. From this position it may be moved to an angled position, e.g. 45°- 60° measured to the horizontal plane, in which the respective flap elements 18 are shown in fig. 2. The flap-like interaction means 17 respectively the flap elements 18 are pivotably mounted, so that they may be swiveled or pivoted from the non-working position to the shown working position, which movement is shown by the arrows P3. As fig. 2 clearly shows, in this position the respective flap-like interaction means 17 respectively the flap elements 18 are orientated or deployed against the wind. They act like spoilers and interact with the wind, which presses against them providing a force in the vertical direction, which creates a respective vertical movement of the lifting apparatus.

As fig. 2 clearly shows, the flap elements 18 in the working position severely change the aerodynamic shape of the lifting apparatus 5. When they interact with the wind, a force resulting from this interaction, in which the wind presses on the flap elements 18, is exerted on the lifting apparatus 5 causing a tilting moment making the lifting apparatus 5 and therefore the blade 8 tilts around the horizontal axis of the cable connection 15. This counteracting tilting moment or tilting movement is such that it is orientated in the other direction as the tilting moment resulting from the interaction of the wind with the blade 8. Therefore, by changing the aerodynamic shape of the lifting apparatus 5 by bringing the flap elements 18 in the working position, a counteracting tilting moment or tilting movement may be created. The movement of the flap elements 18 will add some drag resulting in the respective counter movement, which finally compensates the unwanted vertical movement resulting from the interaction of the wind with the blade 8 and keeps it stable.

For moving the flap elements 18 each interaction means 17 comprises an actuator 19, for example a hydraulic or pneumatic cylinder or an electric motor, which is adapted to precisely move the flap element 18 from the non-working position to the working position, which working position may be any angular position between the horizontal non-working position and the maximum position, to which the flap element 18 may be pivoted. Any intermediate position is adjustable, which provides a great variety regarding the change of the overall aerodynamic shape of the lifting apparatus 5.

All actuators 19 are controlled by a common control device 20, which is here only shown in principle. The control device 20 comprises a respective programmable control element which is adapted to control all actuators 19 separately. This is preferably done in response to the information provided by one or several sensor means 21, which are arranged at the lifting apparatus 5 and which are e.g. adapted to directly sense any vertical movement of the lifting apparatus 5, which is equivalent to a vertical movement of the blade root 13. So, the control device 20 may immediately respond to any relevant information from the constantly monitoring sensor means 21 in order to immediately control or provide a respective counteraction, when an unwanted vertical movement of the blade root 13 is to be expected or has already started.

The control device 20 controls the actuators 19 in such a way that the flap elements 18 are deployed against the wind only as much as necessary, in order to provide a counteracting tilt moment or tilt movement, which compensates the unwanted vertical movement as far as possible. Therefore, the flap elements 18 may be controlled to any intermediate position between the non-working position and the maximum pivotable working position.

As fig. 2 shows, the several flap-like interaction means 17 are arranged at different positions along the frame 6 respectively the support arm 7. They may be arranged at the frame 6 itself, or at the top, the bottom or the side of the support arm 7. Depending on the place of arrangement, they are swiveled to different directions in order to be deployed against the wind, as clearly shown in fig. 2.

As fig. 3 shows, respective flap-like interaction means 17 are arranged on both ends of the lifting apparatus, respectively the yoke. This allows for providing a counteracting tilt moment or tilt movement either in an upward or in a downward direction relative to the counteracting movement of the blade root 13. It is clear that the counteracting tilt moment or tilt movement needs to be directed opposite to the unwanted wind induced tilt moment or tilt movement. As this unwanted tilt moment or tilt movement may be, due to the interaction of the wind with the blade 8, either causes an upward vertical movement or a downward vertical movement of the blade root 13, the counteracting tilt moment or tilt movement needs to be generated in the opposite direction. As the flap-like interaction means 17 are arranged on both sides of the instable cable connection 15, the control of either the flap elements 18 on the one side or of the flap elements 18 on the other side may generate a counteracting tilt moment or movement either in an upward or downward direction.

It is to be noted, that, if necessary, support arms or the like may be attached to the central or main part of the apparatus respectively the frame or the arms, which extend e.g. to the side and which provide additional positions to attach a flap-like interaction means to the apparatus at even farther positions.

As Fig. 3 furthermore shows, the respective flap-like interaction means 17 are not only changeable with their flap elements 18 between a non-working and a working position. They may also be changed in their position at the frame 6 or the respective support arm 7. This is shown in fig. 3 by the respective arrows P4 respectively P5. The arrows P4 show the possibility to move at least some of the flap-like interaction means 17 linearly along the longitudinal axis of the lifting apparatus 5, allowing for positioning a flap-like interaction means 17 in a varying distance relative to the cable connection 15 for changing the lever between the point where the counter tilt moment is induced and the horizontal axis at the connection device respectively the cable connection 15.

The movability shown by the arrows P5 allows for a movement for example along a support arm 7. For example, the one or the several flap-like interaction means 17 arranged on top of the arm 7 may be moved along the arm, in fig. 2 to the left or to the right. The same is true for the one or the several flap-like interaction means 17 arranged at the bottom of the arm 7. They may also be shifted to the left or to the right.

The one or the several flap-like interaction means 17 arranged at the side of the arm 7 may be moved upward or downward.

Any of these shifting movements is again performed by respective actuators 22, which are shown in principle in fig. 2. These actuators 22, for example hydraulic or pneumatic cylinders or electromotors, push the respective flap-like interaction means along a linear guiding for changing its position. Also, this movement respectively the action of the actuators is controlled by the common control device 20, again in response to any information delivered by the sensor means 21.

The inventive flap-like or spoiler-like interaction means system allows for a very variably change of the aerodynamic shape or properties of the lifting apparatus 5 and therefore for a very variable, changeable interaction of the lifting apparatus 5 with the wind in order to produce a wanted counteracting tilt moment or tilt movement, which counteracts an unwanted tilt moment or tilt movement resulting from the interaction of the fast blowing wind with the airfoil-shaped rotor blade 8. The changeability of the flap-like interaction means in the various degrees of freedom, i.e. moving the flap elements 18 between a non-working position and a maximum working position and moving the flap-like interaction means 17 for changing their local position at the frame 6 or the support arm 7, allows for a very wide change of the aerodynamic shape and therefore, for a very exact generation of the counteracting tilt moment or tilt movement by changing the drag, the lifting apparatus deploys against the wind.

Each flap element 18 is preferably a flat plate, which is sufficiently stable and sufficiently large, so that it provides a large interaction surface when it is pivoted to the working position, so that a strong interaction of the wind with the respective flap element 18 is given. The possibility to now compensate any unwanted vertical movement of the blade root 13 resulting from the interaction of the wind with the airfoil-shaped rotor blade 8 provides a number or advantages. The compensation or counteracting system now allows for installing such a rotor blade 8 also at weather conditions, which up to now did not allow such an installation due to a strongly blowing wind. Now the installation may also be done at wind speeds of 16m/s and higher, as the system allows for an excellent compensation of any unwanted vertical movement. Therefore, the weather window, in which the installation may be done is significantly widened. Furthermore, the inventive stabilization or compensation allows for a faster installation, as no time is needed for a cumbersome positioning or orientation of the rotor blade root 13 relative to the mounting interface 10, as no unwanted vertical movement occurs and as the horizontal movement can be countered by the taglines.

Finally, the inventive lifting apparatus respectively the crane with the inventive compensation or counteracting arrow flap system allows for installing even larger blades, which interact even more with the wind causing the previously mentioned problems with an unwanted vertical movement, as this movement can be compensated.

Although the present invention has been described in detail with reference to the preferred embodiment, the present invention is not limited by the disclosed examples from which the skilled person is able to derive other variations without departing from the scope of the invention, as defined in the following claims.

## Claims

1. Lifting apparatus for a lifting crane (1), adapted to carry an elongated component, especially a rotor blade (8) of a wind turbine (12), comprising a frame (6) with at least two support arms (7) for carrying the component, **characterized in that** at least one flap-like interaction means (17) for interacting with blowing wind is provided at the frame (6) or a support arm (7), which flap-like interaction means (17) is movable from a non-working position in a working position, in which it is set against the wind,
wherein the flap-like interaction means (17) is linearly movable, or in a combined linear and curved movement; and
the at least one or each flap-like interaction means (17) is shiftable along the frame (6) or the support arm (7) to change its frame or arm position.

2. Lifting apparatus according to claim 1, **characterized in that** several flap-like interaction means (17) are arranged at different positions at the frame (6) and/or at least one support arm (7).

3. Lifting apparatus according to claim 1 or 2, **characterized in that** the at least one or the several flap-like interaction means (17) are arranged close to or at the end of the frame (6) or at the top or the bottom or the side of the support arm (7).

4. Lifting apparatus according to claim 3, **characterized in that** the several flap-like interaction means (17) are arranged close to or at both ends of the frame (6) or at the top or the bottom or the side of both support arms (7).

5. Lifting apparatus according to one or the preceding claims, **characterized in that** the or at least one of the several flap-like interaction means (17) is mounted pivotally at the frame (6) or support arm (7).

6. Lifting apparatus according to one or the preceding claims, **characterized in that** the at least one controllable actuator (19, 22) is arranged for moving a flap-like interaction means (17) from the non-working position to the working position and/or for changing the position at the frame (6) or support arm (7).

7. Lifting apparatus according to claim 6, **characterized in that** the actuator (19, 22) is a hydraulic or pneumatic or electric cylinder or an electric motor.

8. Lifting apparatus according to one of the preceding claims, **characterized in that** at least one control device (20) is provided for controlling the movement of the at least one or of each flap-like interaction means (17), especially by controlling the or each actuator (19, 22).

9. Lifting apparatus according to claim 8, **characterized in that** at least one sensor means (21) for sensing a given or upcoming vertical tilting of the lifting apparatus (5) or of the frame (6) or of at least one arm is provided, whereby the control device (20) is adapted to control the movement of the at least one or of the several flap-like interaction means (17) depending on the sensor means information.

10. Crane comprising a lifting means (2) with a lifting apparatus (5) according to one of the preceding claims.

11. Crane according to claim 10, **characterized in that** the lifting means (2) comprises one or more lifting cables, to which a connection device (4) is attached, at which connection device (4) the lifting apparatus (5) is attached.

12. Crane according to claim 10 or 11, **characterized in that** one or more taglines (16) are attached to the lifting apparatus (5).

13. Method for lifting a component, especially a rotor blade (8) of a wind turbine (12), using a crane (1) according to one of the claims 10 to 12, **characterized in that** during the lifting process, when a vertical tilting movement of the lifting apparatus (5) or at least the possibility of such a vertical tilting movement is detected, the at least one flap-like interaction means (17) or one or more of the several flap-like interaction means (17) are moved from the non-working position to the working position for counteracting the tilting movement.

14. Method according to claim 13, **characterized in that** during the lifting process the orientation of the lifting apparatus (5) is constantly sensed by at least one sensor means (21) of the lifting apparatus (5), whereby the one or more flap-like interaction means (17) are controlled by a control device (20) based on the provided sensor means information.

15. Method according to claim 14, **characterized in that** the control device (20) controls the movement of the flap-like interaction means (17) from the non-working position to the working position as well as the movement for changing the position of the respective flap-like interaction means (17) at the frame (6) or support arm (7).

## Patentansprüche

1. Hebeeinrichtung für einen Hubkran (1), die angepasst ist, eine langgestreckte Komponente, insbesondere ein Rotorblatt (8) einer Windturbine (12), zu tragen, umfassend einen Rahmen (6) mit mindestens zwei Stützarmen (7) zum Tragen der Komponente, **dadurch gekennzeichnet, dass** mindestens ein klappenartiges Wechselwirkungsmittel (17) zum Wechselwirken mit wehendem Wind an dem Rahmen (6) oder einem Stützarm (7) vorgesehen ist, wobei das klappenartige Wechselwirkungsmittel (17) aus einer Nichtarbeitsposition in eine Arbeitsposition, in der es dem Wind entgegengesetzt ist, bewegbar ist,
wobei das klappenartige Wechselwirkungsmittel (17) linear bewegbar oder in einer kombinierten linearen und gekrümmten Bewegung ist; und
wobei das mindestens eine klappenartige Wechselwirkungsmittel oder jedes klappenartige Wechselwirkungsmittel (17) entlang des Rahmens (6) oder des Stützarms (7) verschiebbar ist, um seine Rahmen- oder Armposition zu ändern.

2. Hebeeinrichtung nach Anspruch 1, **dadurch gekennzeichnet, dass** mehrere klappenartige Wechselwirkungsmittel (17) an unterschiedlichen Positionen an dem Rahmen (6) und/oder mindestens einem Stützarm (7) angeordnet sind.

3. Hebeeinrichtung nach Anspruch 1 oder 2, **dadurch gekennzeichnet, dass** das mindestens eine klappenartige Wechselwirkungsmittel oder die mehreren klappenartigen Wechselwirkungsmittel (17) in der Nähe oder am Ende des Rahmens (6) oder an der oberen Fläche oder der unteren Fläche oder der Seite des Stützarms (7) angeordnet ist/sind.

4. Hebeeinrichtung nach Anspruch 3, **dadurch gekennzeichnet, dass** die mehreren klappenartigen Wechselwirkungsmittel (17) in der Nähe oder an beiden Enden des Rahmens (6) oder an der oberen Fläche oder der unteren Fläche oder der Seite beider Stützarme (7) angeordnet sind.

5. Hebeeinrichtung nach einem der vorhergehenden Ansprüche, **dadurch gekennzeichnet, dass** das klappenartige Wechselwirkungsmittel oder mindestens eines der mehreren klappenartigen Wechselwirkungsmittel (17) schwenkbar an dem Rahmen (6) oder dem Stützarm (7) montiert ist.

6. Hebeeinrichtung nach einem der vorhergehenden Ansprüche, **dadurch gekennzeichnet, dass** der mindestens eine steuerbare Aktor (19, 22) zum Bewegen eines klappenartigen Wechselwirkungsmittels (17) aus der Nichtarbeitsposition in die Arbeitsposition und/oder zum Ändern der Position an dem Rahmen (6) oder dem Stützarm (7) eingerichtet ist.

7. Hebeeinrichtung nach Anspruch 6, **dadurch gekennzeichnet, dass** der Aktor (19, 22) ein hydraulischer oder ein pneumatischer oder ein elektrischer Zylinder oder ein Elektromotor ist.

8. Hebeeinrichtung nach einem der vorhergehenden Ansprüche, **dadurch gekennzeichnet, dass** mindestens eine Steuervorrichtung (20) zum Steuern der Bewegung des mindestens einen klappenartigen Wechselwirkungsmittels oder jedes klappenartigen Wechselwirkungsmittels (17), insbesondere durch Steuern des oder jedes Aktors (19, 22), vorgesehen ist.

9. Hebeeinrichtung nach Anspruch 8, **dadurch gekennzeichnet, dass** mindestens ein Sensormittel (21) zum Erfassen einer gegebenen oder einer bevorstehenden vertikalen Neigung der Hebeeinrichtung (5) oder des Rahmens (6) oder mindestens eines Arms vorgesehen ist, wobei die Steuervorrichtung (20) angepasst ist, die Bewegung des mindestens einen klappenartigen Wechselwirkungsmittels oder der mehreren klappenartigen Wechselwirkungsmittel (17) in Abhängigkeit von den Sensormittelinformationen zu steuern.

10. Kran, der ein Hebemittel (2) mit einer Hebeeinrichtung (5) nach einem der vorhergehenden Ansprüche umfasst.

11. Kran nach Anspruch 10, **dadurch gekennzeichnet, dass** das Hebemittel (2) ein oder mehrere Hebekabel umfasst, an dem/denen eine Verbindungsvorrichtung (4) befestigt ist, wobei an der Verbindungsvorrichtung (4) die Hebeeinrichtung (5) befestigt ist.

12. Kran nach Anspruch 10 oder 11, **dadurch gekennzeichnet, dass** an der Hebeeinrichtung (5) ein oder mehrere Leitseile (16) befestigt sind.

13. Verfahren zum Heben einer Komponente, insbesondere eines Rotorblatts (8) einer Windturbine (12), unter Nutzung eines Krans (1) nach einem der Ansprüche 10 bis 12, **dadurch gekennzeichnet, dass** während des Hebeprozesses, wenn eine vertikale Neigungsbewegung der Hebeeinrichtung (5) oder mindestens die Möglichkeit einer solchen vertikalen Hebebewegung detektiert wird, das mindestens eine klappenartige Wechselwirkungsmittel (17) oder eines oder mehrere der mehreren klappenartigen Wechselwirkungsmittel (17) aus der Nichtarbeitsposition in die Arbeitsposition bewegt wird, um der Neigungsbewegung entgegenzuwirken.

14. Verfahren nach Anspruch 13, **dadurch gekennzeichnet, dass** während des Hebeprozesses die Ausrichtung der Hebeeinrichtung (5) von mindestens einem Sensormittel (21) der Hebeeinrichtung (5) kontinuierlich erfasst wird, wobei das eine oder die mehreren klappenartigen Wechselwirkungsmittel (17) von einer Steuervorrichtung (20) auf Basis der bereitgestellten Sensormittelinformationen gesteuert wird/werden.

15. Verfahren nach Anspruch 14, **dadurch gekennzeichnet, dass** die Steuervorrichtung (20) die Bewegung des klappenartigen Wechselwirkungsmittels (17) aus der Nichtarbeitsposition in die Arbeitsposition sowie die Bewegung zum Ändern der Position des jeweiligen klappenartigen Wechselwirkungsmittels (17) an dem Rahmen (6) oder dem Stützarm (7) steuert.

## Revendications

1. Appareil de levage pour une grue de levage (1), conçu pour porter un composant allongé, en particulier une pale de rotor (8) d'une éolienne (12), comprenant un cadre (6) doté d'au moins deux bras de support (7) pour porter le composant, **caractérisé en ce qu'**au moins un moyen d'interaction de type volet (17) pour interagir avec un vent soufflant est ménagé au niveau du cadre (6) ou d'un bras de support (7), lequel moyen d'interaction de type volet (17) est mobile d'une position de non-travail à une position de travail, dans laquelle il est placé contre le vent,
dans lequel le moyen d'interaction de type volet (17) est linéairement mobile, ou selon un mouvement linéaire et incurvé combiné ; et
l'au moins un ou chaque moyen d'interaction de type volet (17) est apte à être décalé le long du cadre (6) ou du bras de support (7) pour modifier sa position de cadre ou de bras.

2. Appareil de levage selon la revendication 1, **caractérisé en ce que** plusieurs moyens d'interaction de type volet (17) sont agencés à différentes positions au niveau du cadre (6) et/ou d'au moins un bras de support (7).

3. Appareil de levage selon la revendication 1 ou 2, **caractérisé en ce que** l'au moins un ou plusieurs moyens d'interaction de type volet (17) sont agencés à proximité de ou à l'extrémité du cadre (6) ou sur le dessus ou le dessous ou le côté du bras de support (7).

4. Appareil de levage selon la revendication 3, **caractérisé en ce que** plusieurs moyens d'interaction de type volet (17) sont agencés à proximité de ou aux deux extrémités du cadre (6) ou sur le dessus ou le dessous ou le côté des deux bras de support (7) .

5. Appareil de levage selon l'une ou les revendications précédentes, **caractérisé en ce que** le ou au moins l'un des nombreux moyens d'interaction de type volet (17) est monté de manière pivotante au niveau du cadre (6) ou du bras de support (7) .

6. Appareil de levage selon l'une ou les revendications précédentes, **caractérisé en ce que** l'au moins un actionneur commandable (19, 22) est agencé pour déplacer un moyen d'interaction de type volet (17) de la position de non-travail à la position de travail et/ou pour modifier la position au niveau du cadre (6) ou du bras de support (7).

7. Appareil de levage selon la revendication 6, **caractérisé en ce que** l'actionneur (19, 22) est un vérin hydraulique ou pneumatique ou électrique ou un moteur électrique.

8. Appareil de levage selon l'une des revendications précédentes, **caractérisé en ce qu'**au moins un dispositif de commande (20) est ménagé pour commander le mouvement de l'au moins un ou de chaque moyen d'interaction de type volet (17), en particulier par la commande de l'actionneur ou de chaque actionneur (19, 22).

9. Appareil de levage selon la revendication 8, **caractérisé en ce qu'**au moins un moyen capteur (21) pour détecter une inclinaison verticale donnée ou à venir de l'appareil de levage (5) ou du cadre (6) ou d'au moins un bras est ménagé, le dispositif de commande (20) étant conçu pour commander le mouvement de l'au moins un ou des nombreux moyens d'interaction de type volet (17) en fonction des informations de moyen capteur.

10. Grue comprenant un moyen de levage (2) doté d'un appareil de levage (5) selon l'une des revendications précédentes.

11. Grue selon la revendication 10, **caractérisée en ce que** le moyen de levage (2) comprend un ou plusieurs câbles de levage, sur lesquels un dispositif de liaison (4) est fixé, au niveau duquel dispositif de liaison (4) l'appareil de levage (5) est fixé.

12. Grue selon la revendication 10 ou 11, **caractérisée en ce qu'**un ou plusieurs câbles stabilisateurs (16) sont fixés à l'appareil de levage (5).

13. Procédé pour le levage d'un composant, en particulier d'une pale de rotor (8) d'une éolienne (12), à l'aide d'une grue (1) selon l'une des revendications 10 à 12, **caractérisé en ce que** pendant le processus de levage, lorsqu'un mouvement d'inclinaison verticale de l'appareil de levage (5), ou au moins la possibilité d'un tel mouvement d'inclinaison verticale, est détecté(e), l'au moins un moyen d'interaction de type volet (17) ou l'un ou plusieurs moyens d'interaction de type volet (17) sont déplacés de la position de non-travail à la position de travail pour contrecarrer le mouvement d'inclinaison.

14. Procédé selon la revendication 13, **caractérisé en ce que** pendant le processus de levage, l'orientation de l'appareil de levage (5) est constamment détectée par au moins un moyen capteur (21) de l'appareil de levage (5), les un ou plusieurs moyens d'interaction de type volet (17) étant commandés par un dispositif de commande (20) sur la base des informations de moyen capteur fournies.

15. Procédé selon la revendication 14, **caractérisé en ce que** le dispositif de commande (20) commande le mouvement du moyen d'interaction de type volet (17) de la position de non-travail à la position de travail ainsi que le mouvement pour modifier la position du moyen d'interaction de type volet (17) respectif au niveau du cadre (6) ou du bras de support (7).
